# EUROPEAN PATENT APPLICATION

(11) **EP 3 695 766 A1**
(43) Date of publication of application: **19.08.2020**
(21) Application number: 17928305.6
(22) Date of filing: 13.10.2017
(51) Int. Cl.: A47L 9/28

(54) **SELF-PROPELLED VACUUM CLEANER**

(71) Applicant: Chiba Institute of Technology, Narashino-shi, Chiba 275-0016 (JP)
(72) Inventor: FURUTA, Takayuki, Narashino-shi Chiba 275-0016 (JP); TOMONO, Masahiro, Narashino-shi Chiba 275-0016 (JP); YAMATO, Hideaki, Narashino-shi Chiba 275-0016 (JP); YOSHIDA, Tomoaki, Narashino-shi Chiba 275-0016 (JP); SHIMIZU, Masaharu, Narashino-shi Chiba 275-0016 (JP); OKUMURA, Yu, Narashino-shi Chiba 275-0016 (JP); TODA, Kengo, Narashino-shi Chiba 275-0016 (JP); KODACHI ,Takashi, Narashino-shi Chiba 275-0016 (JP); IRIE, Kiyoshi, Narashino-shi Chiba 275-0016 (JP); HARA, Yoshitaka, Narashino-shi Chiba 275-0016 (JP); OGIHARA, Kazuki, Narashino-shi Chiba 275-0016 (JP)
(74) Representative: Stöckeler, Ferdinand
(86) International application number: PCT/JP2017/037165
(87) International publication number: WO 2019/073590

(57) **Abstract**

An autonomous vacuum cleaner is provided which can accurately acquire surrounding information related to target objects in the surroundings. An autonomous vacuum cleaner (1) includes: a vacuum cleaner body (2); a front sensor (31) configured to detect a target object at a far distance from the vacuum cleaner body (2); and a contact sensor (32) configured to detect a target object at a near distance from the vacuum cleaner body (2). A controller (5) is configured including a surrounding information generator (45) configured to generate surrounding information related to target objects around the vacuum cleaner body (2), on the basis of far information detected by the front sensor (31) and near information detected by the contact sensor (32).

## Description

### TECHNICAL FIELD

The present invention relates to an autonomous vacuum cleaner.

### BACKGROUND ART

As an autonomous vacuum cleaner (vacuum cleaning robot) for cleaning the floor surface, an autonomous vacuum cleaner is conventionally known which includes a travel means for causing a vacuum cleaner body to travel, a main cleaning means that is provided on an undersurface of the vacuum cleaner body to suck up dust and the like on the floor surface, and a pair of cameras that captures images ahead of the vacuum cleaner body (refer to, for example, Patent Literature 1). Furthermore, the autonomous vacuum cleaner includes an image generator that calculates the distance to an object (target object) ahead on the basis of the images captured by the cameras and generates a distance image, a determiner that determines whether or not the object in the generated distance image is an obstacle, and a map generator that generates a map of a cleaning area on the basis of the obstacle determination by the determiner, and is configured in such a manner as to clean, avoiding obstacles, while travelling autonomously within the cleaning area on the basis of the generated map.

### CITATION LIST

### PATENT LITERATURE

Patent Literature 1: JP-A-2017-74191

### SUMMARY OF THE INVENTION

### PROBLEMS TO BE SOLVED BY THE INVENTION

However, in such a known autonomous vacuum cleaner as described in Patent Literature 1, a distance image of a target object is generated on the basis of images captured by the cameras; however, the generated distance image depends on the optical characteristics and distance characteristics (depth of field) of the cameras. Accordingly, it is difficult to accurately acquire information on target objects ahead of and around the vacuum cleaner body (surrounding information). In other words, if an attempt is made to capture an image of target objects in a large distance area by increasing the depth of field, accuracy in detecting the distance to each target object reduces. If an attempt is made to increase accuracy in detecting the distance to a target object by reducing the depth of field, a detectable distance area results in reducing. In any case, there is a problem that it is difficult to increase the accuracy of surrounding information to be acquired.

An object of the present invention is to provide an autonomous vacuum cleaner that can accurately acquire surrounding information related to target objects in the surroundings.

### SOLUTIONS TO THE PROBLEMS

An autonomous vacuum cleaner according to the present invention is capable of cleaning while travelling along a floor surface, the autonomous vacuum cleaner including: a vacuum cleaner body including a cleaning means configured to suck up dirt and the like on the floor surface; a far sensor configured to detect a target object at a far distance from the vacuum cleaner body; a near sensor configured to detect a target object at a near distance from the vacuum cleaner body; and a control means configured to control the far sensor and the near sensor. The control means is configured including a surrounding information generator configured to generate surrounding information related to target objects around the vacuum cleaner body, on the basis of far information detected by the far sensor and near information detected by the near sensor.

According to such a present invention, the far sensor detects a target object at a far distance from the vacuum cleaner body, and acquires far information. The near sensor detects a target object at a near distance from the vacuum cleaner body, and acquires near information. The surrounding information generator generates surrounding information on the basis of the far information and the near information. Accordingly, it is possible to expand the detection area ranging from near to far from the vacuum cleaner body and increase accuracy in detecting target objects.

In the present invention, it is preferable that the far sensor is a distance sensor configured to measure a distance from the vacuum cleaner body to a target object present in a predetermined direction, and measures a distance to the target object at a plurality of measuring points arranged on a vertical plane crossing the predetermined direction, the near sensor is a contact sensor configured to detect contact with the target object in the predetermined direction, and the distance sensor is provided to a part of the contact sensor.

According to such a configuration, the far sensor is a distance sensor. The near sensor is a contact sensor. The distance sensor is provided to a part of the contact sensor. Accordingly, it is possible to secure a wide angle of view of the distance sensor. In other words, the contact sensor is installed on a peripheral edge of the vacuum cleaner body in the predetermined direction in such a manner as to come into contact with a target object. Accordingly, the vacuum cleaner body is not present forward of the contact sensor in the predetermined direction. The measurement direction of the distance sensor is provided in the predetermined direction. Accordingly, it is possible to secure the angle of view without the vacuum cleaner body impairing the field of view of the distance sensor.

In the present invention, it is preferable that the contact sensor includes a transparent member configuring a part of a peripheral surface of the vacuum cleaner body in the predetermined direction, the distance sensor includes a light emitter configured to emit light, and a light receiver configured to receive reflected light reflected from the target object, and the light emitter and the light receiver are provided on an inside of the transparent member.

According to such a configuration, the transparent member of the contact sensor configures a part of the peripheral surface of the vacuum cleaner body. The light emitter and the light receiver of the distance sensor are provided on the inside of the transparent member. Accordingly, the light emitter and the light receiver are installed near the peripheral surface of the vacuum cleaner body. Therefore, it is possible to appropriately measure the distance to the target object with the emitted light from the light emitter and the reflected light returned from the target object to the light receiver without the emitted light and the reflected light crossing the vacuum cleaner body. Moreover, the light emitter and the light receiver of the distance sensor are provided on the inside of the transparent member. Accordingly, the light emitter and the light receiver are protected by the transparent member without being exposed to the outside. It is also possible to make the appearance of the autonomous vacuum cleaner excellent as compared to a case where the peripheral surface of the vacuum cleaner body is provided with a hole for the light emitter and the light receiver.

In the present invention, it is preferable that the surrounding information generator generates surrounding information on whether or not a target object is present around the vacuum cleaner body, on the basis of the far information and the near information.

According to such a configuration, the surrounding information generator generates surrounding information on whether or not a target object is present, on the basis of the far information and the near information. Accordingly, as described above, it is possible to expand the detection area and accurately detect a target object. It is also possible to reliably detect an unknown target object if present. Therefore, if the autonomous vacuum cleaner detects an unknown target object at a far or near distance from the vacuum cleaner body during an autonomous cleaning mission in accordance with a map of a cleaning area, the surrounding information generator generates surrounding information including the target object. Accordingly, it is possible to update and store the surrounding information, and continue autonomous cleaning or update the map on the basis of the surrounding information.

In the present invention, it is preferable that the surrounding information generator generates information on a shape of the target object on the basis of the far information, and the control means includes a travel controller configured to control travel of the vacuum cleaner body on the basis of the shape information.

According to such a configuration, the surrounding information generator generates information on the shape of the target object, on the basis of the far information. The travel controller controls the travel of the vacuum cleaner body on the basis of the shape information. Accordingly, the control means can expand the cleaning area efficiently by selecting a travel path according to the shape of the target object, for example, travelling along the periphery of the target object, riding over the target object, going under the target object, or passing between two target objects.

In the present invention, it is preferable that the control means includes: a storage configured to store a plurality of travel schedules in accordance with cleaning target spaces; a determiner configured to determine a cleaning target space on the basis of the surrounding information; and a selector configured to select the travel schedule on the basis of a determination result of the determiner.

According to such a configuration, in the control means, the determiner determines a cleaning target space on the basis of the surrounding information, and the selector selects the travel schedule on the basis of a determination result of the determiner. Accordingly, it is possible to select the optimum travel schedule for each cleaning target space, and increase cleaning efficiency in the cleaning target space. Here, spaces partitioned into appropriate sizes by walls and the like, such as a living room (living room), a dining room (dining room), a bedroom, and a corridor can be exemplified as the cleaning target spaces. In such cleaning target spaces, installed objects such as furniture, electric appliances, equipment, and carpets are generally installed. It is possible to increase cleaning efficiency by selecting an appropriate travel schedule according to the installation state of such an installed object.

### BRIEF DESCRIPTION OF THE DRAWINGS

Fig. 1 is a perspective view of an autonomous vacuum cleaner according to one embodiment of the present invention as viewed from above.
Fig. 2 is a perspective view of the autonomous vacuum cleaner as viewed from below.
Fig. 3 is a perspective view of a protruding state of a surrounding cleaning means in the autonomous vacuum cleaner as viewed from above.
Fig. 4 is a perspective view of the protruding state of the surrounding cleaning means in the autonomous vacuum cleaner as viewed from below.
Fig. 5 is a front view illustrating the protruding state of the surrounding cleaning means in the autonomous vacuum cleaner.
Fig. 6 is a right-side view illustrating the protruding state of the surrounding cleaning means in the autonomous vacuum cleaner.
Fig. 7 is a back view illustrating the protruding state of the surrounding cleaning means in the autonomous vacuum cleaner.
Fig. 8 is a functional block diagram illustrating a schematic configuration of the autonomous vacuum cleaner.
Fig. 9 is a partial cross-sectional view of a contact sensor provided to a front part of the autonomous vacuum cleaner.
Fig. 10 is a partial cross-sectional view of the contact sensor at a position indicated by line A in Fig. 9.
Fig. 11 is a partial cross-sectional view of the contact sensor at a position indicated by line B in Fig. 9.
Fig. 12 is a perspective view illustrating the contact sensor and a distance sensor.
Fig. 13 is a cross-sectional view illustrating the contact sensor and the distance sensor.
Fig. 14 is a partial cross-sectional view illustrating a part of the enlarged contact sensor.
Fig. 15 is a partial cross-sectional view illustrating a part of the enlarged contact sensor.
Fig. 16 is a partial cross-sectional view illustrating a part of the enlarged contact sensor.
Fig. 17 is a partial cross-sectional view illustrating a part of the enlarged contact sensor.
Fig. 18 is a partial cross-sectional view illustrating a part of the enlarged contact sensor.

### DESCRIPTION OF THE EMBODIMENTS

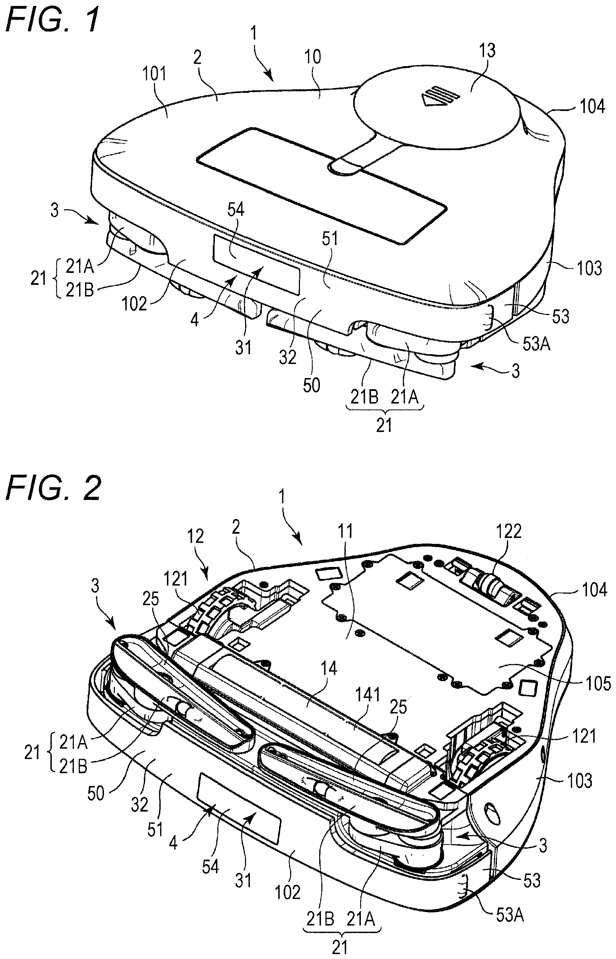

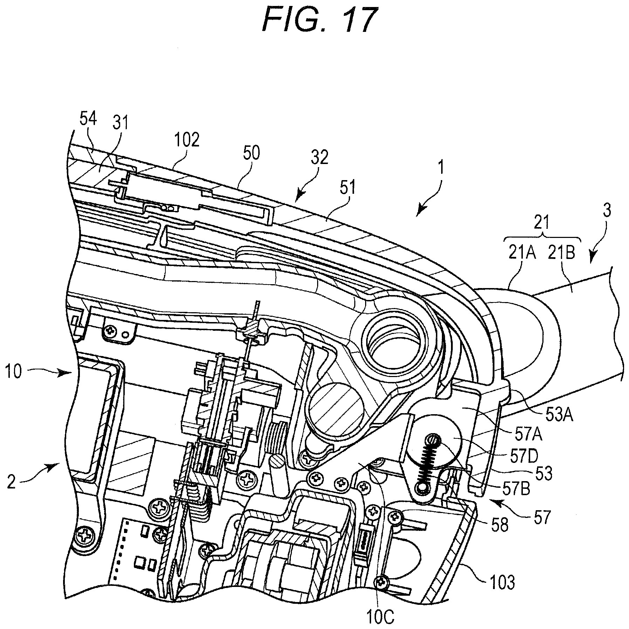

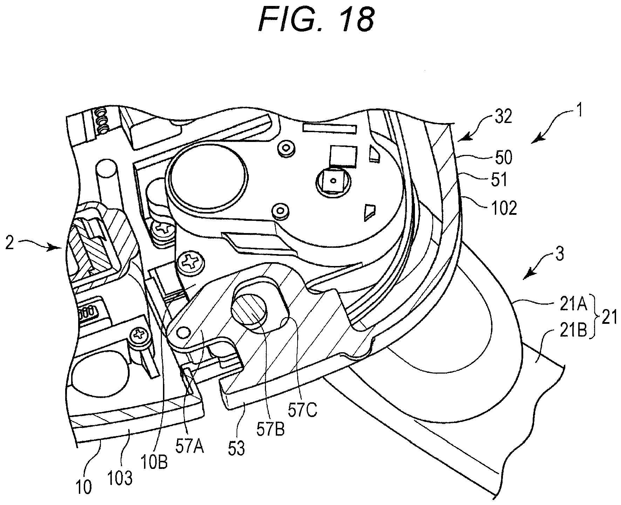

One embodiment of the present invention is described hereinafter on the basis of Figs. 1 to 18.

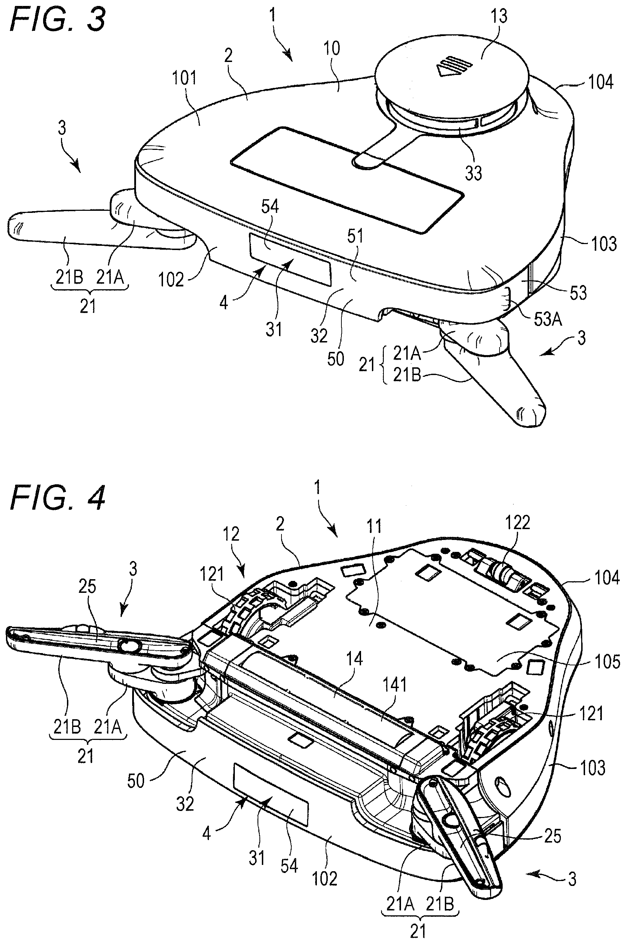

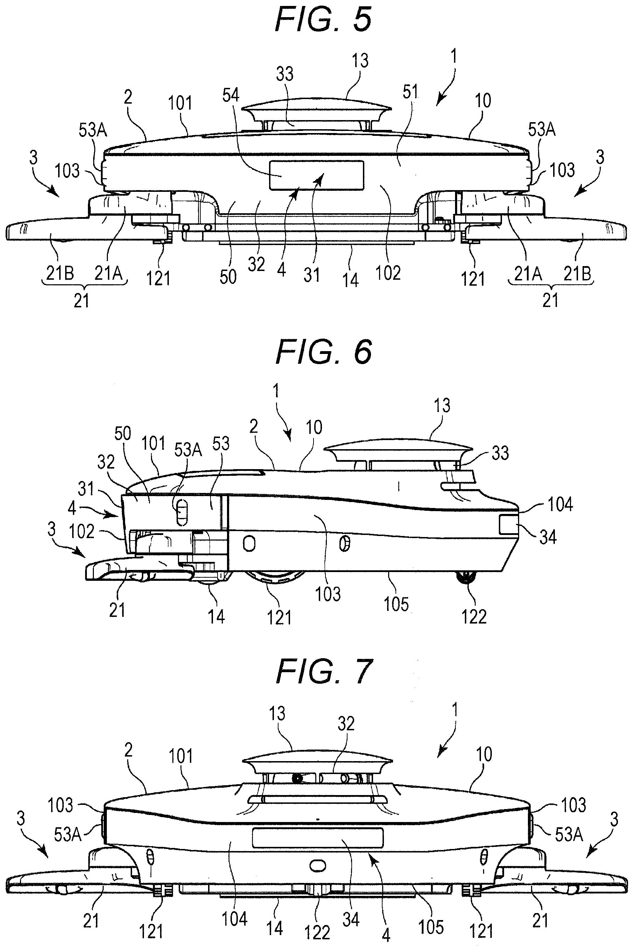

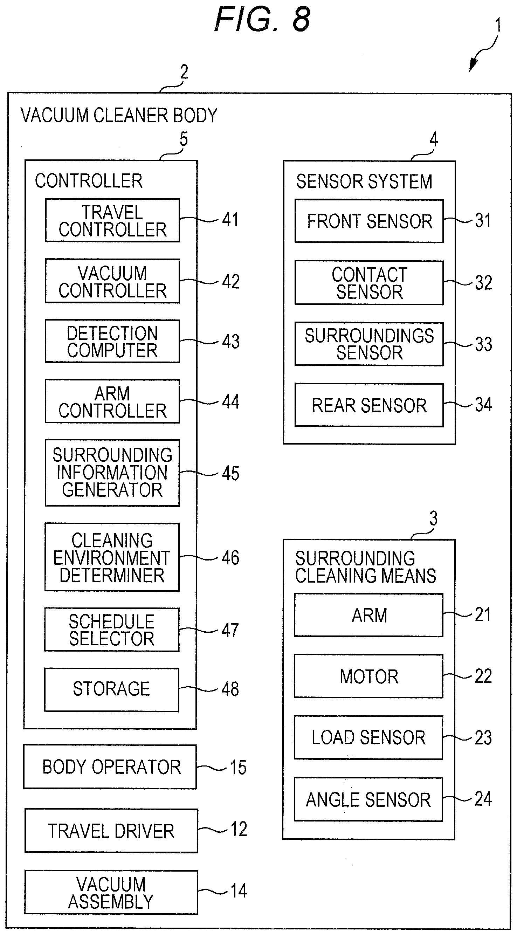

Fig. 1 is a perspective view of an autonomous vacuum cleaner according to one embodiment of the present invention as viewed from above. Fig. 2 is a perspective view of the autonomous vacuum cleaner as viewed from below. Fig. 3 is a perspective view of a protruding state of a surrounding cleaning means in the autonomous vacuum cleaner as viewed from above. Fig. 4 is a perspective view of the protruding state of the surrounding cleaning means in the autonomous vacuum cleaner as viewed from below. Figs. 5 to 7 are a front view, a right-side view, and a back view, which illustrate the protruding state of the surrounding cleaning means in the autonomous vacuum cleaner. Fig. 8 is a functional block diagram illustrating a schematic configuration of the autonomous vacuum cleaner.

An autonomous vacuum cleaner 1 is a vacuum cleaning robot that cleans the floor surface, travelling along the floor surface, and as illustrated in Figs. 1 to 8, includes a vacuum cleaner body 2, a surrounding cleaning means 3 for cleaning around the vacuum cleaner body 2, a sensor system 4 including various sensors for detecting a target object around the vacuum cleaner body 2, and a controller 5 (refer to Fig. 8) as a control means for controlling and driving the vacuum cleaner body 2, the surrounding cleaning means 3, and the sensor system 4. The autonomous vacuum cleaner 1 cleans, travelling autonomously, on the basis of a map and a travel schedule for each cleaning target space stored in the controller 5.

The vacuum cleaner body 2 includes a body 10 and a chassis 11. The body 10 configures a top surface 101, left and right side surfaces 103, and a rear surface 104 of the autonomous vacuum cleaner 1. The chassis 11 configures an undersurface 105. The sensor system 4 includes a contact sensor 32 having a bumper 50 as described below. A front surface of the bumper 50 configures a front surface 102 of the autonomous vacuum cleaner 1.

Furthermore, the vacuum cleaner body 2 includes a travel driver 12 having a pair of left and right wheels 121 for travelling autonomously, a lift 13 that is provided, configured to be capable of lifting up from the top surface 101 of the body 10, a vacuum assembly (main cleaning means) 14 that is provided on the undersurface 105 of the body 10 to suck up dust and dirt on the floor surface, and a body operator 15 (refer to Fig. 8) for operating the vacuum cleaner body 2. The body operator 15 is, for example, a touch sensor switch (not illustrated) provided on the top surface 101 of the vacuum cleaner body 2, and operates the autonomous vacuum cleaner 1 with a touch operation by a user and stops the autonomous vacuum cleaner 1 with a touch operation during operation.

The surrounding cleaning means 3 are provided in a pair on left and right sides of a front part of the vacuum cleaner body 2. The surrounding cleaning means 3 includes a pivotable arm 21 that protrudes sideway from the vacuum cleaner body 2, a motor 22 that drives the arm 21 to pivot, a load sensor 23 that detects load acting on the motor 22 from the outside, and an angle sensor 24 that detects the pivot angle of the arm 21. The arm 21 of the surrounding cleaning means 3 is configured including a first arm 21A that is rotatably supported on one end side thereof by the vacuum cleaner body 2, and a second arm 21B that is rotatably supported on the other end side of the first arm 21A. The first arm 21A as a whole is formed into a hollow shape. One end side of the first arm 21A is rotatably supported by the chassis 11. The second arm 21B as a whole is formed into an extra-long cup shape that opens downward. A middle portion of the second arm 21B is rotatably supported on the other end side of the first arm 21A. The second arm 21B includes a sub-vacuum inlet 25 that opens downward to suck up dirt and the like on the floor surface. The sub-vacuum inlet 25 communicates with a duct and a dust collection chamber of the vacuum assembly 14 through internal spaces of the second arm 21B and the first arm 21A.

The sensor system 4 is configured including a front sensor (far sensor) 31 and the contact sensor (near sensor) 32, which are provided to the front part of the autonomous vacuum cleaner 1, a surroundings sensor 33 provided in the lift 13, and a rear sensor 34 provided on the rear surface 104 of the body 10. The front sensor 31 and the contact sensor 32 are described below. The surroundings sensor 33 is a laser scanner (LIDAR (Light Detection and Ranging or Laser Imaging Detection and Ranging)) that is driven and rotated inside the lift 13 and measures distance by applying laser light such as infrared laser light, and is for calculating the distance to an obstacle and the shape of the obstacle. The surroundings sensor 33 is not limited to the one provided in the lift 13 and is simply required to be provided at any position in the body 10. The rear sensor 34 is for detecting its distance and position with respect to an unillustrated recharging station or the like, and communicates with infrared light or the like with the recharging station or the like.

The travel driver 12 includes the pair of left and right wheels 121, and a motor (not illustrated) that drives and rotates the pair of wheels 121 independently. Moreover, an auxiliary wheel 122 is provided to a rear part of the chassis 11. The vacuum assembly 14 is connected to a roller brush 141, and the duct, a suction fan, the dust collection chamber, and an exhaust port, which are not illustrated. The vacuum assembly 14 is configured in such a manner as to collect the sucked dust and the like through a filter of the dust collection chamber and exhaust the sucked air from the exhaust port. The duct or dust collection chamber of the vacuum assembly 14 is connected to a sub-duct as a dust collection path communicating with the arm 21 of the surrounding cleaning means 3.

The controller 5 includes a travel controller 41 that controls the travel driver 12, a vacuum controller 42 that controls the vacuum assembly 14, a detection computer 43 that processes detection signals from the front sensor 31, the contact sensor 32, the surroundings sensor 33, and the rear sensor 34 of the sensor system 4, and the load sensor 23 and the angle sensor 24 of the surrounding cleaning means 3, an arm controller 44 that controls and drives the motor 22 of the surrounding cleaning means 3 and causes the arm 21 to pivot, and a surrounding information generator 45 that processes the detection signals from the front sensor 31 and the contact sensor 32 and generates surrounding information. Furthermore, as described below, the controller 5 is configured including a cleaning environment determiner (determiner) 46 that determines a cleaning target space, a schedule selector (selector) 47 that selects a travel schedule of the autonomous vacuum cleaner 1, and a storage (memory) 48 that stores various pieces of information such as surrounding information and a travel schedule.

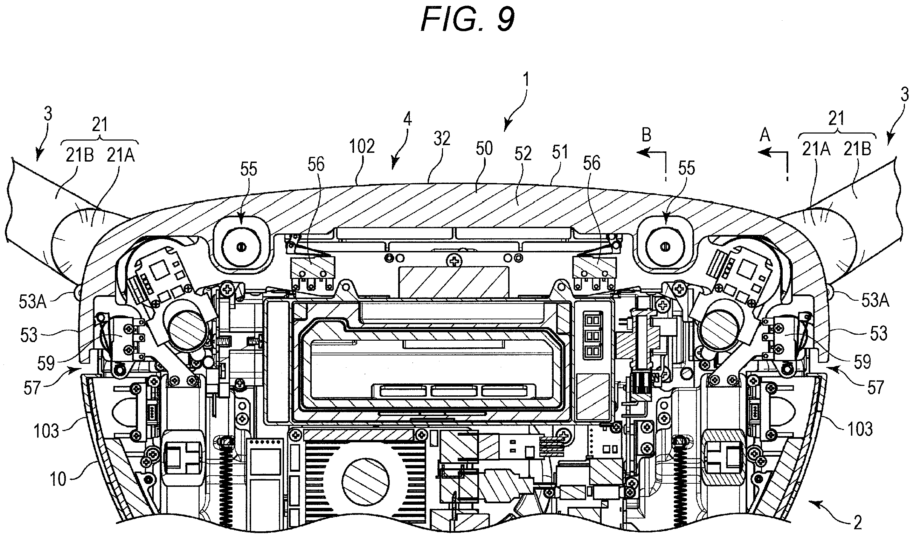

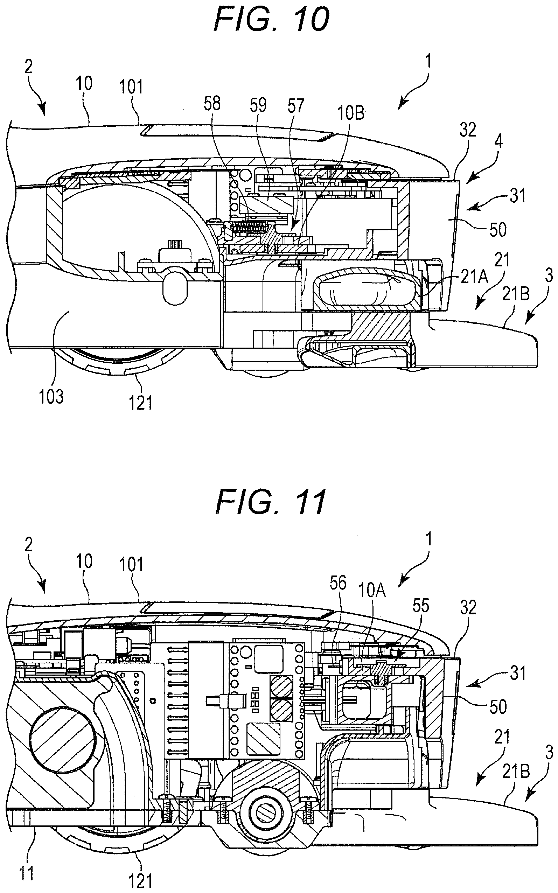

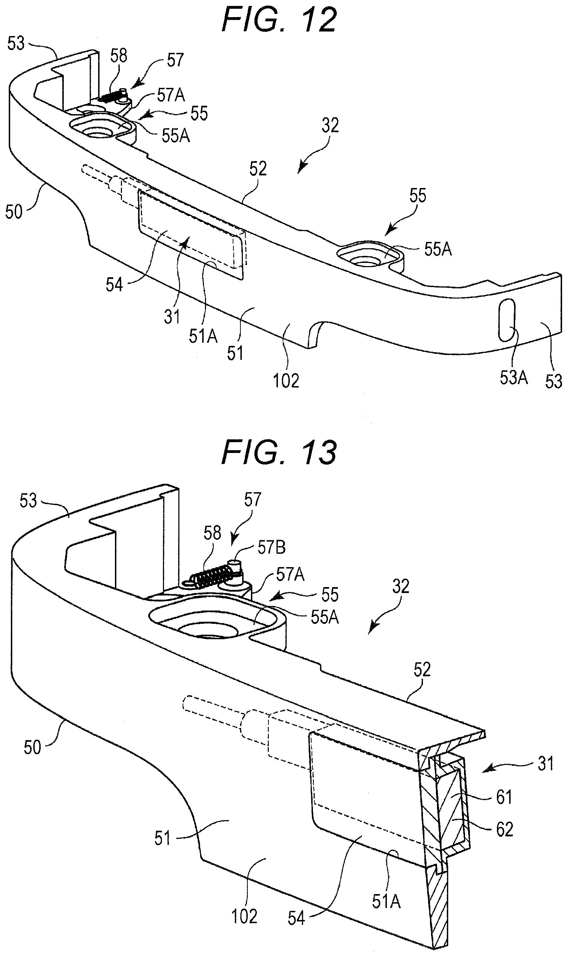

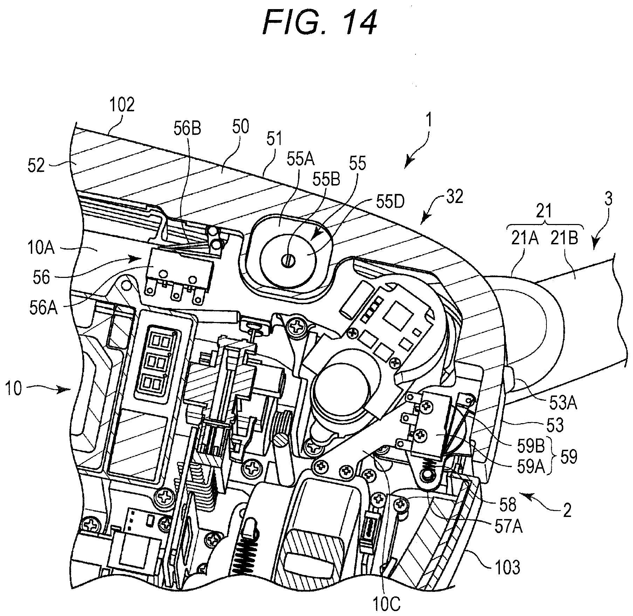

The structures and operations of the front sensor 31 and the contact sensor 32, and the cleaning operation of the autonomous vacuum cleaner 1 based on the structures and operations are described in detail below with reference also to Figs. 9 to 18. Fig. 9 is a partial cross-sectional view of the contact sensor provided to the front part of the autonomous vacuum cleaner. Fig. 10 is a partial cross-sectional view of the contact sensor at a position indicated by line A in Fig. 9. Fig. 11 is a partial cross-sectional view of the contact sensor at a position indicated by line B in Fig. 9. Figs. 12 and 13 are a perspective view and a cross-sectional view, which illustrate the contact sensor and a distance sensor. Figs. 14 to 18 are partial cross-sectional views illustrating a part of the enlarged contact sensor, respectively.

As illustrated in Figs. 9 to 13, the contact sensor 32 includes the bumper 50 that is supported at the front part of the autonomous vacuum cleaner 1 in such a manner as to be movable in a front-and-rear direction and a left-and-right direction with respect to the body 10. The bumper 50 is formed including a front plate 51 that extends in an arc shape in the left-and-right direction and configures the front surface 102 of the autonomous vacuum cleaner 1, an upper plate 52 extending from an upper end of the front plate 51 toward the rear of the body 10, and a pair of side plates 53 extending from left and right end portions of the front plate 51 toward the rear, respectively. A rectangular opening 51A is formed in the front plate 51. An acrylic board 54 as a transparent member is mounted on the front plate 51, covering the opening 51A. The acrylic board 54 is flush with the front plate 51 of the bumper 50 and configures the front surface 102 of the autonomous vacuum cleaner 1. A projection 53A that protrudes outward of the side surface 103 of the body 10 is provided on an outer surface of each of the pair of side plates 53.

The front sensor 31 is a 3D sensor such as a depth camera or 3D-LIDAR and, as illustrated in Fig. 13, includes a light emitter 61 that emits light such as infrared light or laser light to the front, and a light receiver 62 that receives reflected light being the emitted light reflected and returned from a target object. The light emitter 61 and the light receiver 62 are provided along the inside of the acrylic board 54. The light receiver 62 includes an image sensor such as a CMOS or CCD where a plurality of light receiving devices is placed in a lattice form (matrix form). The light receiver 62 receives the reflected light with the plurality of light receiving devices (measuring points) on a two-dimensional plane along a vertical plane orthogonal to the front-and-rear direction of the autonomous vacuum cleaner 1. Therefore, the front sensor 31 is configured to function as a far sensor that detects the distance to a target object for each light receiving device on the basis of the time between emission of light from the light emitter 61 and reception of reflected light reflected from the target object on each light receiving device of the light receiver 62, and accordingly detects the target object ahead of the autonomous vacuum cleaner 1 three-dimensionally. The distance to the target object ahead detected three-dimensionally by the front sensor 31 is transmitted as far information to the controller 5.

The upper plate 52 of the bumper 50 is provided with a pair of left and right first supports 55 that supports the bumper 50 in such a manner that the bumper 50 is movable in the front-and-rear direction and the left-and-right direction with respect to the body 10. An anteroposterior sensor 56 that detects the movement of the bumper 50 to the rear with respect to the body 10 is provided near each first support 55. Moreover, a second support 57 that supports the bumper 50 in such a manner that the bumper 50 is movable in the front-and-rear direction and the left-and-right direction with respect to the body 10, and a coil spring 58 that biases the bumper 50 to an initial position are provided on the inside of each of the left and right side plates 53. A lateral sensor 59 that detects the movement of the bumper 50 to the right or left with respect to the body 10 is provided near each second support 57.

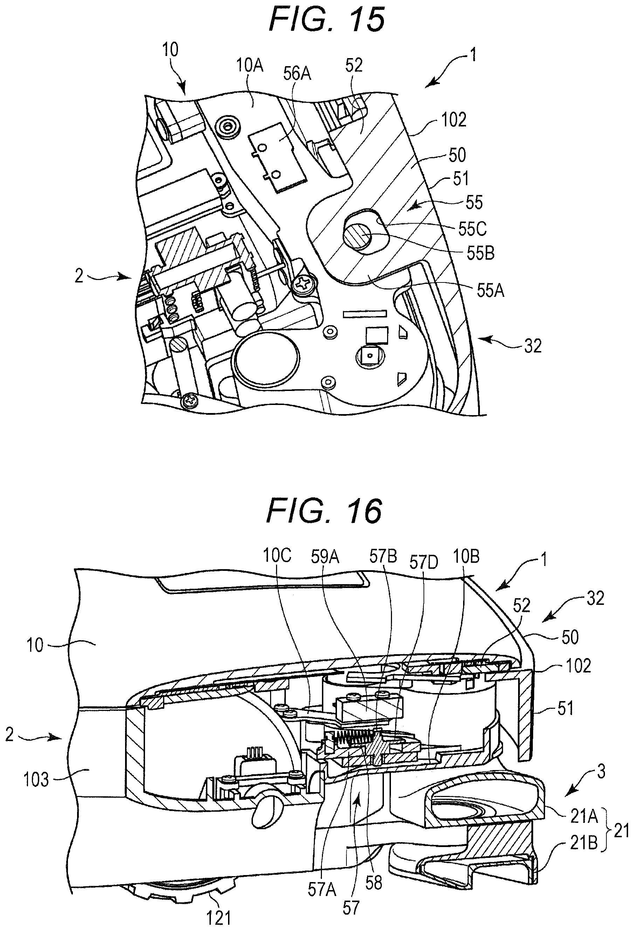

As illustrated in Figs. 14 and 15, the first support 55 includes a first support plate 55A extending to the rear from the upper plate 52 of the bumper 50, and a pin 55B that penetrates the first support plate 55A vertically and is fixed to a horizontal surface 10A inside the body 10. A through-hole 55C having a larger inside diameter than an outside diameter of the pin 55B is formed in the first support plate 55A. The pin 55B is loosely inserted into the through-hole 55C so that the bumper 50 is movable in the front-and-rear direction and the left-and-right direction. A keep plate 55D in sliding contact with the first support plate 55A from above is fixed to an upper end portion of the pin 55B. The first support plate 55A is sandwiched between the keep plate 55D and the horizontal surface 10A of the body 10. Accordingly, the vertical movement of the bumper 50 is restricted.

The anteroposterior sensor 56 is a micro switch including a switch body 56A fixed to the horizontal surface 10A of the body 10, and a detection needle 56B that protrudes from the switch body 56A and is connected at a distal end thereof to the upper plate 52 of the bumper 50. When the detection needle 56B is deformed toward the switch body 56A with the movement of the bumper 50, the switch body 56A outputs a detection signal to the controller 5. The detection computer 43 of the controller 5 receives the detection signal from the anteroposterior sensor 56. Accordingly, the detection computer 43 detects the movement of the bumper 50 to the rear and judges that an obstacle has collided with the bumper 50 from the front.

As illustrated in Figs. 16 to 18, the second support 57 includes a second support plate 57A extending horizontally from the inside of the side plate 53 of the bumper 50, and a pin 57B that penetrates the second support plate 57A vertically and is fixed to a horizontal surface 10B inside the body 10. A through-hole 57C having a larger inside dimeter than an outside diameter of the pin 57B is formed in the second support plate 57A. The pin 57B is loosely inserted into the through-hole 57C so that the bumper 50 is movable in the front-and-rear direction and the left-and-right direction. A keep plate 57D in sliding contact with the second support plate 57A from above is fixed to an upper end portion of the pin 57B. The second support plate 57A is sandwiched between the keep plate 57D and the horizontal surface 10B of the body 10. Accordingly, the vertical movement of the bumper 50 is restricted.

The coil spring 58 is a tension spring coupled in a biased state to the upper end of the pin 57B and the second support plate 57A. The coil spring 58 is configured in such a manner as to return the bumper 50 to the initial position with the biasing force of the coil spring 58 increased by the movement of the bumper 50 in the front-and-rear direction and the left-and-right direction. In other words, the through-holes 55C and 57C are formed into a pentagon having the apex on the rear side. The bumper 50 is biased to the front by the coil spring 58 to guide the apices of the through-holes 55C and 57C to the pins 55B and 57B. In this manner, the bumper 50 is configured in such a manner as to return to the initial position. The lateral sensor 59 is a micro switch including a switch body 59A fixed to a bracket 10C inside the body 10, and a detection needle 59B that protrudes from the switch body 59A and is connected at a distal end thereof to the side plate 53 of the bumper 50. When the detection needle 59B is deformed toward the switch body 59A with the movement of the bumper 50, the switch body 59A outputs a detection signal to the controller 5. The detection computer 43 of the controller 5 receives the detection signal from the lateral sensor 59. Accordingly, the detection computer 43 detects the movement of the bumper 50 in the direction of left or right, and judges that an obstacle has collided with the bumper 50 from the side.

In terms of the above contact sensor 32, the bumper 50 is biased by the coil spring 58 in a state where a force from the outside does not act thereon. Consequently, the bumper 50 protrudes several millimeters forward with respect to the body 10, and is located at the initial position in the middle in the left-and-right direction. When an external force acts on the bumper 50 from the front side, the bumper 50 moves back with respect to the body 10, and the anteroposterior sensor 56 transmits a detection signal to the detection computer 43. Accordingly, the controller 5 detects the presence of an obstacle (target object) ahead, near the autonomous vacuum cleaner 1. When an external force acts on the bumper 50 from the right side (or left side), the bumper 50 moves to the left (or right) with respect to the body 10, and the lateral sensor 59 on the right side (or left side) transmits a detection signal to the detection computer 43. Accordingly, the presence of an obstacle (target object) is detected to the right (or left), near the autonomous vacuum cleaner 1. In this manner, the contact sensor 32 functions as a near sensor that detects target objects ahead and to the left and right, near the autonomous vacuum cleaner 1. Information on the nearby target object detected by the contact sensor 32 is processed as near information in the controller 5.

The surrounding information generator 45 of the controller 5 generates surrounding information related to target objects around the autonomous vacuum cleaner 1, on the basis of the far information from the front sensor 31 and the near information from the contact sensor 32. Here, the target objects include fixed objects such as the wall surface, floor surface, and door, which form a cleaning target space such as a living room or a corridor, installed objects such as furniture, electric appliances, and carpets, which are installed in the cleaning target space, and non-fixed objects such as everyday items, clothes, footwear, and toys, which are placed on the floor surface of the cleaning target space. The fixed object does not move and therefore serves as a reference that provides a map and travel path of the cleaning target space. The installed object does not usually move but its position may be changed due to new installation, disposal, alterations to the room, or the like. Accordingly, the installed object may become an obstacle during a cleaning mission. The non-fixed object is unsteady in terms of the presence or absence of an existence thereof, and has a large possibility of becoming an obstacle during a cleaning mission. The surrounding information generator 45 generates surrounding information, taking such fixed objects, installed objects, and non-fixed objects as target objects.

The surrounding information generated by the surrounding information generator 45 in this manner relates to target objects such as fixed objects, installed objects, and non-fixed objects, and includes planar location information in the cleaning target space, and information on the three-dimensional shapes of the target objects. The controller 5 generates a map of the cleaning target space on the basis of the surrounding information, and generates a travel schedule based on the map of the cleaning target space. The controller 5 causes the storage 48 to store the map and the travel schedule. The travel schedule is a travel path-based cleaning mode where set values related to place and time are defined, for example, cleaning using both or one of the vacuum assembly 14 and the surrounding cleaning means 3, repeatedly cleaning the same spot, changing suction powers of the vacuum assembly 14 and the surrounding cleaning means 3, and changing the travel speed of the travel driver 12.

The timings when the surrounding information generator 45 generates surrounding information include, for example, a case of a map generation mode of newly generating a map of a new cleaning target space, a case of a map updating mode of updating a map for a known cleaning target space for which a map has already been generated, a case of an autonomous cleaning mode of performing normal autonomous cleaning on a known cleaning target space, and a case of a space determination mode of determining an appropriate cleaning target space among a plurality of known cleaning target spaces. In the map generation mode, the map updating mode, and the space determination mode, the vacuum assembly 14 and the surrounding cleaning means 3 may be driven to clean, or may not be driven.

In the map generation mode of newly generating a map of a new cleaning target space, the autonomous vacuum cleaner 1 detects the distance to a target object ahead three-dimensionally with the front sensor 31 while traveling autonomously with the travel driver 12, and the detection computer 43 causes the storage 48 to sequentially store the distance to the target object (far information). Moreover, if the front sensor 31 does not detect the nearest target object, for example, at the start of traveling, or if a sudden change occurs in environment, for example, if a non-fixed object is placed ahead of the autonomous vacuum cleaner 1, when the contact sensor 32 comes into contact with the target object, the detection computer 43 recognizes the presence of the target object at the location of the contact, and causes the storage 48 to store the location (near information). The surrounding information generator 45 generates surrounding information on the basis of the far and near information acquired by repeating the detection and storage of target objects during autonomous traveling, and the controller 5 generates a map.

The cleaning target space map generated in this manner includes the shapes of target objects such as the floor surface, the wall surface rising from the floor surface, surfaces of furniture and the like rising continuously from the floor surface, a level difference on the floor surface, projections protruding from the floor surface and the wall surface, and side surfaces and undersurfaces of furniture and the like, which are away upward from the floor surface. The controller 5 generates a travel path and a travel schedule for thoroughly and efficiently cleaning the entire cleaning target space in accordance with the map, and causes the storage 48 to store the travel path and the travel schedule. At this point in time, the controller 5 determines whether or not it is possible to ride over a level difference on the floor surface and, if it is possible to ride over the level difference, includes the level difference in the travel path and, if it is determined that it is not possible to ride over the level difference, excludes the level difference from the travel path. Moreover, the controller 5 determines whether or not it is possible to fit in a gap between the floor surface and the undersurface of furniture or the like, or a gap between the wall surface and the side surface of the furniture or the like and, if it is possible to fit in the gap, includes the gap in the travel path and, if it is determined that it is not possible to fit in the gap, excludes the gap from the travel path.

In the map updating mode of updating a map for a known cleaning target space for which a map has been generated as described above, as in the above-mentioned map generation mode, the autonomous vacuum cleaner 1 detects target objects with the front sensor 31 and the contact sensor 32 while travelling autonomously, the surrounding information generator 45 generates surrounding information, and the controller 5 computes a difference from the surrounding information included in the map, and updates the map of the cleaning target space. Moreover, if maps are generated in cleaning target spaces different from the cleaning target space for which the map has already been generated, the controller 5 causes the storage 48 to separately store a map and a travel schedule for each cleaning target space.

Next, a description is given of the operation of the autonomous vacuum cleaner 1 in the autonomous cleaning mode for a known cleaning target space for which a map has already been generated. Here, maps and travel schedules for a plurality of cleaning target spaces have already been stored in the storage 48. Unless a user designates a cleaning target space, the controller 5 executes the space determination mode for determining a cleaning target space. In the space determination mode, as in the above-mentioned map generation mode, the autonomous vacuum cleaner 1 detects target objects with the front sensor 31 and the contact sensor 32 while travelling autonomously, and the surrounding information generator 45 generates surrounding information. The cleaning environment determiner 46 of the controller 5 compares and matches the surrounding information generated by the surrounding information generator 45 and surrounding information included in the plurality of maps stored in the storage 48, and determines an appropriate cleaning target space among the plurality of cleaning target spaces. The schedule selector 47 selects an appropriate travel schedule from the plurality of travel schedules stored in the storage 48, on the basis of the determination result of the cleaning target space.

As described above, if a cleaning target space is determined and a travel schedule is selected, or if a user designates a cleaning target space, the autonomous vacuum cleaner 1 starts cleaning the cleaning target space as the autonomous cleaning mode. In other words, the vacuum assembly 14 and the surrounding cleaning means 3 clean the floor surface during autonomous traveling with the travel driver 12 in accordance with a travel path and a travel schedule for the cleaning target space. In the autonomous cleaning mode, the autonomous vacuum cleaner 1 detects a surrounding wall surface and the like with the surroundings sensor 32 in addition to cleaning with the vacuum assembly 14, and retracts the arm 21 of the surrounding cleaning means 3 on the basis of the detection, or causes the arm 21 to pivot to put the arm 21 in the protruding state, and performs cleaning with the surrounding cleaning means 3.

Moreover, in the autonomous cleaning mode, the autonomous vacuum cleaner 1 detects target objects with the front sensor 31 and the contact sensor 32. The surrounding information generator 45 generates surrounding information, and compares the surrounding information with surrounding information included in the map of the cleaning target space. In other words, if surrounding information different from the surrounding information included in the map is generated, for example, if a target object that is not present in the surrounding information included in the map is detected, or if a target object that is present in the surrounding information included in the map is not detected (is not present), the controller 5 once cancels the travel path and travel schedule based on the map. The autonomous vacuum cleaner 1 executes autonomous cleaning in accordance with the surrounding information generated by the surrounding information generator 45. After returning to the travel path based on the map, the autonomous vacuum cleaner 1 continues autonomous cleaning again according to the original travel schedule until the end of the travel schedule.

If the surrounding information included in the map is different from the surrounding information generated by the surrounding information generator 45 during the cleaning mission in the autonomous cleaning mode in this manner, the autonomous vacuum cleaner 1 displays an enquiry about whether or not to update the map of the cleaning target space together with a message to the effect that the surrounding information, that is, the target object in the cleaning target space is different from the map, for the user after the end of cleaning. If the user selects "update", the controller 5 updates the map of the cleaning target space on the basis of the generated surrounding information. If the user selects "do not update," the controller 5 does not update the map and keeps the original map of the cleaning target space. Here, a case where it is considered that the state of a target object has been changed due to new installation, movement, or removal of an installed object such as furniture, can be exemplified as the user's motivation to update the map. A case where it is considered that a non-fixed object such as an everyday item that was temporarily placed has just been detected as a target object and it is not necessary to change the map can be exemplified as a motivation to not update the map.

According to such an embodiment, the following operations and effects can be exerted:
(1) The front sensor 31 detects a target object at a relatively far distance ahead of the autonomous vacuum cleaner 1, and acquires far information. The contact sensor 32 detects a target object at a relatively near distance ahead of or to the side of the autonomous vacuum cleaner 1, and acquires near information. The surrounding information generator 45 generates surrounding information on the basis of the far information and the near information. Accordingly, it is possible to continuously expand the detection area ranging from near to far from the autonomous vacuum cleaner 1 and increase accuracy in detecting a target object.
(2) The contact sensor 32 is configured including the bumper 50. The bumper 50 is provided with the front sensor 31. Accordingly, there are no other portions of the autonomous vacuum cleaner 1 forward of the bumper 50. Therefore, the field of view of the front sensor 31 is not impaired, and a wide angle of view can be secured for the front sensor 31. Accuracy in detecting a target object can be further increased. Moreover, when the front sensor 31 is installed at the forefront of the autonomous vacuum cleaner 1, the front sensor 31 is mounted on the movable bumper 50. Accordingly, the movement of the bumper 50 functions as a cushion upon a collision with an obstacle or the like, and can soften the effect of an impact on the front sensor 31 to reduce damage.
(3) The acrylic board 54 as the transparent member provided to the bumper 50 of the contact sensor 32 configures a part of the front surface 102. The light emitter 61 and the light receiver 62 of the front sensor 31 are provided along the inside of the acrylic board 54, which results in installation of the light emitter 61 and the light receiver 62 near the front surface 102. Therefore, emitted light from the light emitter 61 and reflected light returned from a target object to the light emitter 61 are not inhibited by other portions. The distance to the target object can be appropriately measured with the emitted light and the reflected light.
(4) The light emitter 61 and the light receiver 62 of the front sensor 31 are provided along the inside of the acrylic board 54. Accordingly, the light emitter 61 and the light receiver 62 are protected by the acrylic board 54 without being exposed to the outside. In addition, the appearance of the autonomous vacuum cleaner 1 can be made excellent as compared to a case where the front surface 102 is provided with a hole for the light emitter 61 and the light receiver 62. Moreover, the front plate 51 of the bumper 50 and the acrylic board 54 are flush with each other to configure the front surface 102 of the autonomous vacuum cleaner 1. Accordingly, the front surface 102 is formed into a smooth continuous curved surface without projections and depressions. Therefore, it is possible to make it difficult for the front surface 102 to catch things such as a curtain and clothing, and make it easy to clean the outside of the front surface 102, wiping it with a towel.
(5) The surrounding information generator 45 generates surrounding information on whether or not a target object is present in the surroundings also in the autonomous cleaning mode. Accordingly, for example, even if a target object that is not present in a map is present, or a target object that is present in a map is not present, the surrounding information generator generates new surrounding information. Accordingly, autonomous cleaning in accordance with the current state of the cleaning target space can be performed.
(6) The surrounding information generator 45 generates information on the three-dimensional shape of a target object on the basis of far information acquired by the front sensor 31. The travel controller 41 controls the travel of the autonomous vacuum cleaner 1 on the basis of the shape information. Accordingly, it is possible to select a travel path according to the shape of a target object, for example, traveling along the periphery of the target object, riding over the target object, going into a gap of the target object, or passing between two target objects, and efficiently widen the cleaning area.
(7) In the controller 5, the cleaning environment determiner 46 determines a cleaning target space on the basis of surrounding information, and the schedule selector 47 selects a travel schedule on the basis of the determination result of the cleaning environment determiner 46. Accordingly, it is possible to select the optimum travel schedule for each cleaning target space, and increase cleaning efficiency in the cleaning target space.

### [Modifications of Embodiment]

The present invention is not limited to the above embodiment, and includes modifications, improvements, and the like within the scope that can achieve the object of the present invention.

For example, in the autonomous vacuum cleaner 1 of the above embodiment, the contact sensor 32 is configured including the bumper 50 provided to the front part of the autonomous vacuum cleaner 1. The bumper 50 is provided with the front sensor 31. However, the configuration is not limited to such a configuration. In other words, the contact sensor as the near sensor is not limited to the one provided to the front part of the autonomous vacuum cleaner, and may be provided to the side or rear part of the autonomous vacuum cleaner. The near sensor is not limited to the one including the bumper 50 and may be an optical sensor such as an infrared sensor with a short focus distance.

Moreover, the front sensor 31 as the far sensor is not limited to a 3D sensor such as a depth camera or a 3D-LIDAR as in the above embodiment, and may be an imaging means such as a CCD camera including a lens and an imaging device. If such an imaging means is used, image information obtained by capturing an image of a target object is obtained as far information. Image processing is performed by a control means on the image information. Accordingly, the surrounding information generator can generate three-dimensional shape information as surrounding information of the target object. The use of the imaging means allows acquiring not only the external shape of the target object but also the surface shape (texture) and color information of the target object. If the target object is determined on the basis of the texture and the color information and surrounding information is generated, cleaning can be performed in accordance with the material and the like of the target object.

In the above embodiment, the autonomous vacuum cleaner 1 is configured including the surrounding cleaning means 3, the surroundings sensor 33, and the rear sensor 34. However, each of these portions is not an essential configuration of the autonomous vacuum cleaner of the present invention and can be omitted as appropriate. Moreover, the configuration of the surrounding cleaning means is not limited to the one including the arm 21 that pivots as in the above embodiment, and may be one including an arm that protrudes and retracts linearly from the vacuum cleaner body, or a general one including a rotary brush. Moreover, the operation of the surrounding cleaning means is not limited to the one based on the surroundings sensor 33. On the basis of the surrounding information generated by the surrounding information generator 45, the surrounding cleaning means may be driven in accordance with the shape and material of a target object, or the operating mode may be changed.

In the above embodiment, it is assumed that in the four modes of the map generation mode, the map updating mode, the space determination mode, and the autonomous cleaning mode, the surrounding information generator 45 generates surrounding information on the basis of detection by the front sensor 31 and the contact sensor 32. However, the timings to generate surrounding information may not be in all of the four modes. In other words, for example, in the autonomous cleaning mode, autonomous cleaning may be executed in accordance with a map without generating surrounding information, and the front sensor 31 and the contact sensor 32 may be used only to avoid obstacles. Conversely, only in the autonomous cleaning mode, cleaning may be executed without using a map, generating surrounding information. Moreover, in a mode other than the four modes, the surrounding information generator 45 may generate surrounding information, which may be, for example, a location correction mode for correcting a deviation of the autonomous vacuum cleaner from a travel path based on a map.

### INDUSTRIAL APPLICABILITY

As described above, the present invention can be suitably used for an autonomous vacuum cleaner that can accurately acquire surrounding information related to target objects in the surroundings.

### LIST OF REFERENCE NUMERALS

- 1: Autonomous vacuum cleaner
- 2: Vacuum cleaner body
- 4: Sensor system
- 5: Controller (control means)
- 14: Vacuum assembly (cleaning means)
- 31: Front sensor (far sensor)
- 32: Contact sensor (near sensor)
- 41: Travel controller
- 45: Surrounding information generator
- 46: Cleaning environment determiner (determiner)
- 47: Schedule selector (selector)
- 48: Storage (memory)
- 54: Acrylic board (transparent member)
- 50: Bumper
- 61: Light emitter
- 62: Light receiver

## Claims

1. An autonomous vacuum cleaner capable of cleaning while travelling along a floor surface, comprising:
a vacuum cleaner body including a cleaning means configured to suck up dirt and the like on the floor surface;
a far sensor configured to detect a target object at a far distance from the vacuum cleaner body;
a near sensor configured to detect a target object at a near distance from the vacuum cleaner body; and
a control means configured to control the far sensor and the near sensor, wherein
the control means is configured including a surrounding information generator configured to generate surrounding information related to target objects around the vacuum cleaner body, on the basis of far information detected by the far sensor and near information detected by the near sensor.

2. The autonomous vacuum cleaner according to claim 1, wherein
the far sensor is a distance sensor configured to measure a distance from the vacuum cleaner body to a target object present in a predetermined direction, and measures a distance to the target object at a plurality of measuring points arranged on a vertical plane crossing the predetermined direction,
the near sensor is a contact sensor configured to detect contact with the target object in the predetermined direction, and
the distance sensor is provided to a part of the contact sensor.

3. The autonomous vacuum cleaner according to claim 2, wherein
the contact sensor includes a transparent member configuring a part of a peripheral surface of the vacuum cleaner body in the predetermined direction,
the distance sensor includes a light emitter configured to emit light, and a light receiver configured to receive reflected light reflected from the target object, and
the light emitter and the light receiver are provided on an inside of the transparent member.

4. The autonomous vacuum cleaner according to any of claims 1 to 3, wherein the surrounding information generator generates surrounding information on whether or not a target object is present around the vacuum cleaner body, on the basis of the far information and the near information.

5. The autonomous vacuum cleaner according to any of claims 1 to 4, wherein
the surrounding information generator generates information on a shape of the target object on the basis of the far information, and
the control means includes a travel controller configured to control travel of the vacuum cleaner body on the basis of the shape information.

6. The autonomous vacuum cleaner according to any of claims 1 to 5, wherein the control means includes:
a storage configured to store a plurality of travel schedules in accordance with cleaning target spaces;
a determiner configured to determine a cleaning target space on the basis of the surrounding information; and
a selector configured to select the travel schedule on the basis of a determination result of the determiner.
